# EUROPEAN PATENT APPLICATION

(11) **EP 1 575 249 A2**
(43) Date of publication of application: **14.09.2005**
(21) Application number: 05005193.7
(22) Date of filing: 09.03.2005
(51) Int. Cl.: H04M 1/11

(54) **Securing device**

(30) Priority: 10.03.2004 GB 0405360; 17.11.2004 GB 0425287
(71) Applicant: Diam UK Limited, LE11 5XS (GB)
(72) Inventor: Wassell, Kim Dieter, Leicestershire LE9 7SF (GB)
(74) Representative: Wood, Graham

(57) **Abstract**

A securing system for the display of an item, said security system having a mounting and said mounting including a first securing means depending therefrom. The first securing means is provided so as to maintain a securing link between the mounting and at least one member, wherein the item is attached to the at least one member by a second securing means so that the item and member can be removably and replaceably located relative to said mounting. The item may be an electronic device such as a mobile telephone and may be displayed for inspection and trial by a viewer.

## Description

The invention which is the subject of this application relates to the provision of a securing system which can be used to allow the retention, in a secure manner, and particularly, although not exclusively, display of an item in a retail environment while allowing the said item to be available to be picked up and/or used by a customer.

Typically, although not necessarily exclusively, the item is an electrical item having at least one user selectable function. Yet further, the item is typically a communication device in the form of a mobile telephone which has a wide range of functions which can be selected by a user, by depression of a key or number of keys in a particular sequence.

The invention is hereonin described with respect to the display of mobile telephones in a retail environment but it should be appreciated that the invention, and the features thereof, can be applicable with regard to other items which are provided for display and trial in a retail environment and the scope of the patent application extends to the use of the invention with said further items.

The use of retail environments such as shops to display and sell mobile telephones is well known. The shops can be operated by retail outlets who offer for sale telephones for use on different networks, either by the network providers themselves or by phone manufacturers. Customers generally wish to inspect the telephones with regard to their size, weight, design and functions prior to purchase. Conventionally, rather than put on display each of the phones which are available for purchase, or a selection of the same, what is put on display are model replicas of the phone. These replicas look like the real phone handset but do not include any of the inner electronics or functions which would normally allow the telephone handset to be operable. Thus, while the customer can look at the replica handset and can pick the same up, the user has no capability of seeing the telephone in operation and indeed does not even obtain an accurate indication of the weight of the telephone.

Thus, the use of replicas in retail environments, is inferior to the real telephone being available for display but, is tolerated, due to the fears of theft if the real telephone handset was to be available for display. Indeed, it is known that there is even a risk of theft of the replica handsets which are on display. The replicas are attached via a cable or other securing means to an anchor point which is provided behind the display screen on which the handsets are mounted. However, the location of the conventional securing means with the replica is only possible as the same passes through the housing of the telephone handset. If the inside electronics were present, the same would be rendered inoperable by the securing means or alternatively, the securing means of a conventional form would not be usable.

In addition the problem of displaying electronic devices such as mobile telephones is further compounded since batteries within the telephones on display wear down due to the telephone being displayed in a standby condition or else due to operation of the telephone by sales assistants or customers. Once a battery has run out, a customer will no longer be able to see the telephone in operation and it is impractical to have to constantly check the status of each telephone on display to ensure it can be used.

The aim of the present invention is to provide a securing system for the display of an item whereby in the preferred option, the provision and display of a fully operable item in a retail environment is made possible while, at the same time, ensuring that the security for the items is such, and sufficient, that the fully operable items can be displayed without fear of theft of the same.

In a first aspect of the invention, there is provided a securing system for the display of an item, said security system having a mounting including a first securing means depending therefrom, said securing means provided so as to maintain a securing link between the mounting and item and wherein, the item is attached to at least one member by a second securing means such that the item and member can be removably and replaceably located on said mounting.

In one embodiment, the member comprises two panels and, prior to said panels being brought together to form the member, a portion of the securing means is located and trapped between said first and second panels so as to secure the portion within the member when formed. Preferably the first securing means is a cable.

In one embodiment, the cable, a first end of which is secured to the member and which passes to a reel and housing, said housing located on the mounting and the reel allowing the length of cable held thereon to be selectively pulled out by gripping of the item and moving the same away from the mounting or display. Typically the reel includes a retraction means biasing the cable in a rewind direction such that when the item is released, the cable is rewound into the housing and pulls the item back to the display unit.

Typically the housing of the reel is positioned on the mounting so as to lock the mounting into position on a support frame, said mounting thereafter not being releasable without first releasing the reel housing.

In an alternative embodiment, the first securing means comprises an adjustable arm which depends outwardly from the mounting and the configuration and orientation of said arm can be adjusted by a customer so as to present the item to them at the required angle and orientation. Typically, once the arm has been positioned by the customer, the arm stays in that position until further movement force is applied thereto.

In this embodiment, the arm, at its free end, has a cradle into which the item is placed along with the member.

In the embodiment where the first securing means is a cable depending from a reel, a cradle can be positioned on, or as part of the mounting to receive the item and the member attached thereto.

According to one embodiment the item is attached to the member by a second securing means. The second securing means may include one or more cables which pass from the member around the front of the item and back to the member thereby securing said item to the member. The end portions of the cables may be trapped between the first and second panels of the member.

In one embodiment, the item has a plurality of user selectable keys on a front and/or sides thereof, and said one or more cables are positioned with respect to the item such that the cable does not pass over any of said buttons or keys thereby allowing the same to be operable.

In an alternative embodiment, the second securing means passes between the rear of the item and the member. In one embodiment, the rear part of the item is, at least initially separable from the item so as to allow securing means to be inserted through the rear part into the member and when the rear part is subsequently positioned on the item, access cannot be gained to the securing means to allow release of the same.

Typically, suitable engagement means can be provided between the rear of the item and the first panel of the member and between the first panel and the second panel so as to :provide secure engagement between the same and form the member. In one embodiment, the securing means can be an adhesive and/or mechanical securing means and/or tape with adhesive layers thereon. In any embodiment, it is preferred that no gaps are left between the first and second panels and/or item at the interfaces between the same thereby preventing the insertion of any means to try and force the same apart.

Typically, the ends of the first and second securing means which are located between the panels, are received in formed locations on the interface surfaces of the first and second panels when brought together so as to securely locate the securing means and prevent removal of the same from the member without the use of a tool or the like which would be obvious and discernable in the retail environment.

By providing the first and second securing means as herein described, so the item can be provided for display and be available for use i.e. as a fully functional item which can be provided for display and trial, rather than a replica. When one considers that the item can be typically, an electronic: device such as a mobile telephone, it will readily be appreciated that the ability to display the same in a usable form, allows potential customers to actually use the item and also for sales assistants in the retail environment to show the features of the item to customers.

Typically power is provided to the item via a battery unit. To provide further security, in the case that the item is an electronic device such as a mobile telephone or PDA, once the battery has been inserted into the device then a glue or epoxy can be poured into the interior of the unit thereby securing the battery in position along with a SIM card and other components required for operation thus securing the rear housing panel in situ. In addition to added security, this also renders the item unusable if the same was stolen.

In one embodiment, the member for the item, includes a series of tabs formed at suitable locations thereon and depending from an edge of the member, said tabs positioned such that when the member is located with the item, the tabs overlie and mask any release mechanism which may be provided on the item, and prevent the operation of the same.

In the case that the item is an electrical device, batteries powering the item may need to be recharged and, in one embodiment, this can be done with the items in situ on the display means. Preferably a severable electrical connection is provided between the item and an electrical supply to allow charging and/or operation of the device when the connection is complete. In one embodiment, the member completes an electrical connection between the device and the electricity supply when positioned on the mounting, and the electrical connection is broken by removing the member from the mounting. Alternatively, the electrical connection may be permanently provided via the first securing means.

Advantageously, the item can be automatically recharged when placed in a position on the mounting for display and selectively removed for inspection.

According to a preferred embodiment the mounting has a surface with at least one conductive portion positioned for relative contact with a corresponding conductive portion on a surface of the member when the device is located in the mounting, preferably in a position for display. The provision of conductive portions on the surface of each of the mounting and the member is beneficial in that an electrical connection can occur when any part of the conductive portions come into contact and does not require an exact alignment.

According to a particular embodiment the mounting and the member each include a magnetic portion disposed therein such that the device and the mounting are magnetically attracted in a manner to ensure that the member is correctly positioned on the mounting and preferably to ensure that the respective conductive portions are in contact. The mounting may include a permanent magnet and the mounting member may include a steel slug.

According to one particular embodiment, an electricity supply is provided via a wire or cable connection with one end connected to a plug, and the other end adapted to be releasably connected to the item and wherein an intermediate portion of the wire connection is split, with one of the intermediate ends of the wire connection terminating in electrical contacts provided in the mounting and the other of the intermediate ends of the wire connection terminating in electrical contacts provided in the member.

Typically one or more wire connections pass through grooves or recesses within the member and are provided with a standard connector at a free end for connection to the electrical device.

Specific embodiments of the invention will now be described with reference to the accompanying drawings, wherein:-
Figures 1a and b illustrates a perspective view of an item being displayed in accordance with the invention in two embodiments;
Figure 2 illustrates a diagram showing the securing system in accordance with one embodiment of the invention and some of the components therefor;
Figure 3 illustrates, in more detail, the interfaces of the panels for the mounting plate arrangement;
Figure 4a and b illustrate respective rear and front perspective views of a third embodiment of the present invention;
Figure 5 shows an exploded view of the components of figure 4; and,
Figure 6 shows plan views of the components of figure 4.

Within the embodiments described below, the mounting takes the form of a mounting bracket shaped to maintain the telephone in a correct orientation. However it will be appreciated that the mounting may take the form of a flat plate attached to a wall, provided with a cradle for reception of the display item, or else may be otherwise shaped to receive the member. The mounting may be a part of a building such as a wall, a floor or a fixture or fitting, any member attached thereto, or extending therefrom, or else a free standing unit. Accordingly the member may take the form of a mounting plate, as described in relation to the below embodiments, or else may be otherwise shaped for receipt by the mounting.

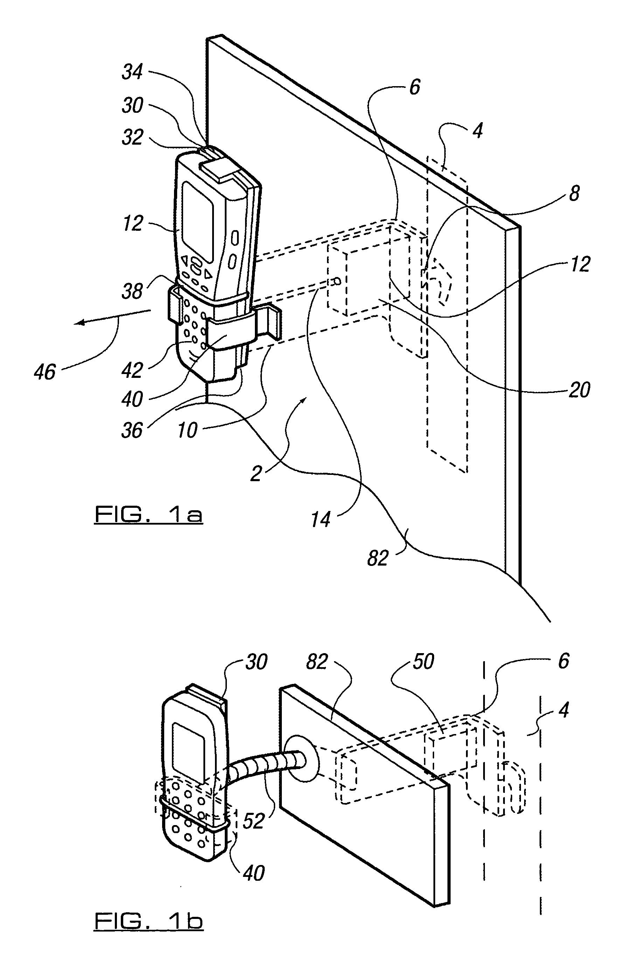

Referring firstly to Figure 1, there is illustrated a security and display system in accordance with one embodiment of the invention.

The system 2 comprises, in this embodiment, a mounting frame 4. The frame 4 is provided as a mounting "ladder" in that there are a series of spaced locations formed along the same, each provided for the selective positioning of a mounting bracket. Thus, when preparing the display, the sales assistant can select at which height they want the mounting bracket to be and place the mounting bracket in position. The mounting bracket has a first end 8 for reception in the frame 4 and an opposing end 10 which is provided to support the item 12 to be displayed and secured. Once the bracket is placed in position, as shown in Figure 1, a securing means arrangement is located on the mounting bracket. This comprises a cable 14 which is mounted on a reel (not shown) provided within a housing 20. The housing 20 is mounted onto the bracket 6 as shown and the position of the same prevents the bracket from being moved in a pivotal direction which would be required to allow the bracket to be released from the member 4. Thus, to subsequently remove the bracket, the housing 20 is first required to be removed and, as an additional security measure, the fixing means for the housing onto the bracket may not themselves be releasable at all without damage to the same or, without the use of a particular tool.

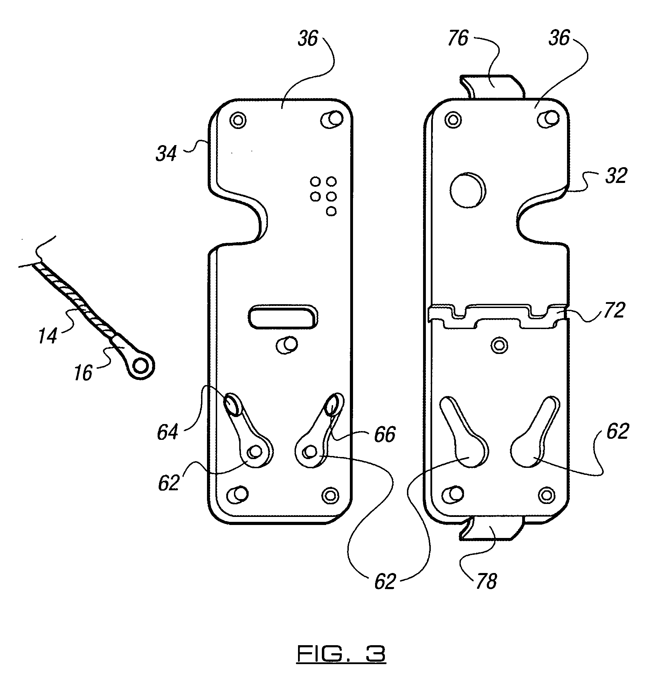

The cable 14 which extends from the housing has a free end 16 and this free end, as shown in Figure 3, is located within a mounting member 30 in a manner which will be described subsequently. The mounting member is provided of two panels 32, 34 which are joined together to form the member along an interface 36 in a manner which will also be described subsequently. In this embodiment, the second securing means are in the form of a cable 38 which passes from the sides of the mounting member and around the front of the item forming a loop around the item to be displayed which, in this case, is a mobile telephone. It will be seen that the telephone 12 has a series of keys 42 which can be depressed selectively by the user to allow the mobile telephone to perform any of a range of functions. It will also be appreciated how, in this arrangement, the loop of cable 38 which passes around the telephone is located so as not to lie over any of the keys of the telephone, therefore allowing the same to be fully functional and without the securing means hampering the operation of the same. Thus, the display and securing of the mobile telephone is achieved and typically, a cradle 40 is provided to allow the mobile telephone to be placed at rest.

When the mobile telephone is required to be studied by a customer, the customer can remove the telephone from the cradle 40 and then pull the same towards them as indicated by arrow 46. As they do so, the first securing means cable 44 is pulled out of the reel housing and can continue to be pulled out until the length of cable is exhausted. While in this position, the user can selectively activate the mobile telephone 12 which has the required components therein by depressing the appropriate keys on the same. When the demonstration or trial is completed the telephone can then be returned to the cradle.

Figure 1b illustrates another embodiment of the invention where the same components of Figure 1 have the same reference numerals. The main difference in this case is that the first securing means is not a cable and therefore there is not required to be provided a cable reel. There is provided first securing means in the form of an elongate member or arm 52 which depends from the mounting bracket 6 to the cradle 40 for the reception of the item therein. The item is again provided with a mounting member 30 with the mounting member being secured to the arm 52. The arm is typically resilient in that the same can be manipulated to a particular angle or configuration and then stays in that angle or configuration until a movement force is again applied thereto. Typically, in order to ensure that the mounting bracket is still locked in position on the mounting 4, a block 50 or other locking means can be mounted on the mounting bracket to prevent pivoting of the bracket with respect to the mounting.

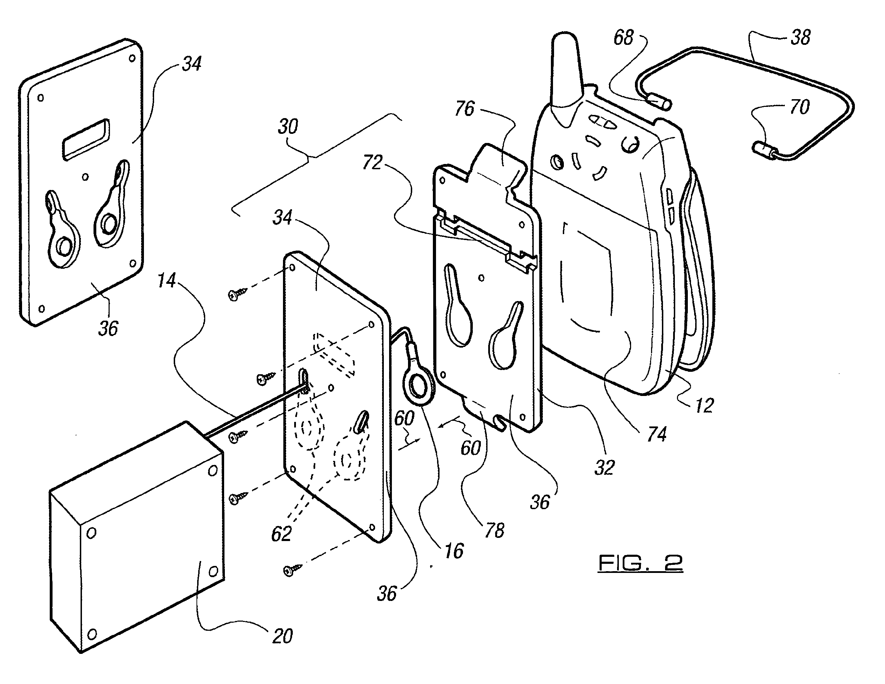

Figures 2 and 3 illustrate some of the components of the securing means assembly of Figure 1a and illustrate how the same are utilised, in conjunction, to provide a securing system in accordance with the invention. The embodiment shown is that which would be used for the embodiment of Figure 1 with a "fold over" phone. The free end 16 of the first securing means cable 14 is shown and also shown are the locating means on the panel interfaces 36 which are to be brought together as indicated by arrows 60 of the first and second panels which, when said surfaces are brought together and adhered, form the mounting member 30. The free end formation 16 on the securing means cable is located in one of the locating means 62 as shown with the cable 14 passing through the aperture 64 or 66. Also, prior to the first and second panels being brought together, the free ends 68, 70 of the second securing means, which takes the form of cable 38, are located in the location means 72 provided on the interface 36 of the panel 32 as illustrated.

The particular form of these location means can be adjusted so as to allow the second securing means to be range taking inasmuch that a number of different designs of items can be securely held by the second means cable even though the same may be of differing shapes. It should be appreciated that although each of the first and second panels can be formed to suit a particular item design, it is preferred that the same can be range taking.

Thus, once the first and second securing means are attached to the mounting member as herein described, the plate is located with the rear 74 of the item. The member also includes tabs 76, 78 or other protrusions which are positioned with respect to the particular item so as to prevent access to any mechanical release means for components of the item.

In one embodiment, in addition to providing the securing means as herein described, the components in the interior of the item can also be secured together, in one embodiment, by adding an adhesive into the interior so as, for example, to join the battery with the casing and an outer cover as a single unit. This therefore means that it is not possible to release particular parts of the item without using mechanical force or tools which would be obvious in a retail environment.

Typically, there is provided in accordance with the invention, a display unit for electronic items such as mobile phones and wherein the display unit has a series of phones mounted at spaced positions for display and trial to a customer with: each of the mobile phones being fully active and therefore allowing all of the functions to be used and trialled and each of the phones is provided on the display unit via one of the securing systems as herein described. Typically, a front display panel 82 is provided which is viewable by the customer such that only the cradle 40 and the mobile phone 12 and cable 14 is viewable in the embodiment of Figure 1a while in Figure 1b, the elongate member 52, cradle 40 and phone 12 are viewable by the user along with the mounting plate 30 on the rear of the phone. The remainder of the component can be hidden from view by the provision of the front display pane 82.

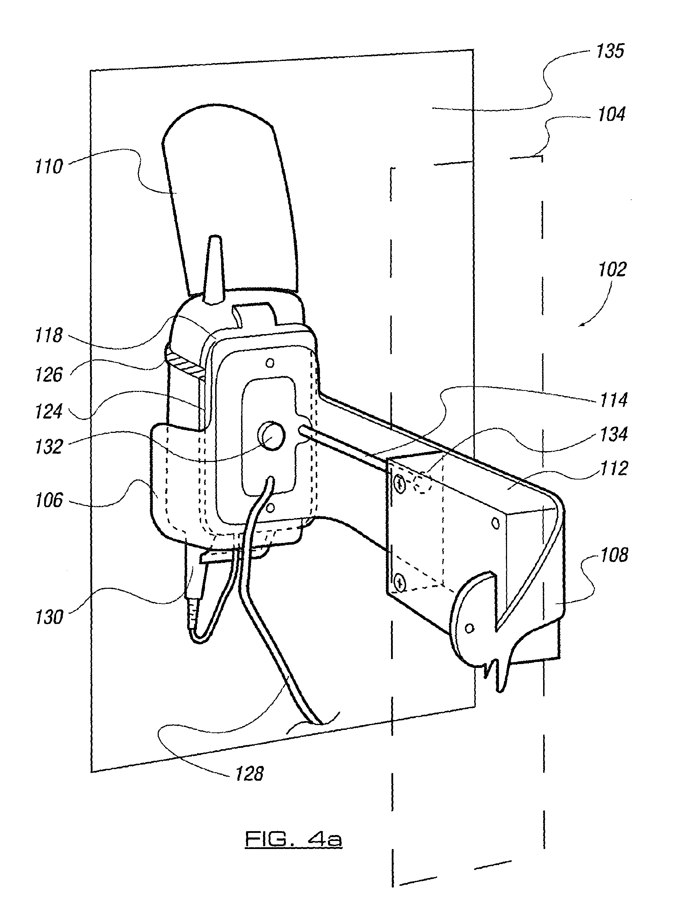

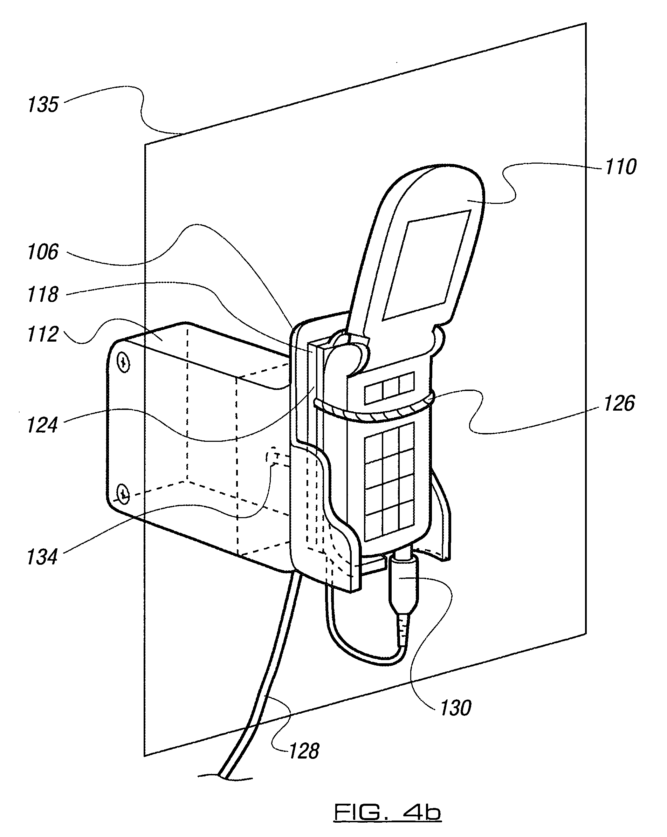

Turning now to figures 4 to 6, securing apparatus 102 comprises, in this embodiment, a mounting frame 104 as in the embodiment of figure 1, which receives one end of the mounting bracket 108 and allows selective positioning of the same. The opposing end of the bracket 108 is attached by screws to a mounting 106 with a cradle provided to support the device 110 to be displayed and secured. Once the bracket 108 is placed in position in the frame 104, as shown in Figure 4, the mounting 106 can be screwed in place.

The cable 114 extends between the housing 112 and the member 118, which again comprises two panels 120 and 122 joined along an interface 124 to form a plate member in the same manner as the embodiment of figure 1 and allows the device 110 to be removed from the cradle for demonstration or trial purposes and replaced in the cradle 106 in a secure fashion.

The cable 114 extends from a hole 134 within the reel housing 112 and has an end 116 which is larger than the hole so that the end 116 acts as a stop and prevents the cable 114 from rewinding fully onto the reel. In the case that the cable 114 is cut, a sensor (not shown) can detect if the reel has rotated in a rewind direction more than a predetermined number of turns or else if tension is lost in the cable 114 and triggers an alarm.

The present embodiment differs from that of figure 1 in that an electrical connection in the form of wire 128 extends from the rear of the cradle 106 and has a plug (not shown) attached to the free end thereof for connection to a power supply socket. A connector 130 is provided which is releasably attached at one end to the device 110 and at the other end to the mounting member 118. A cylindrical permanent magnet 133 is also visible in the rear side of the cradle 106 through an aperture in the mounting bracket 108.

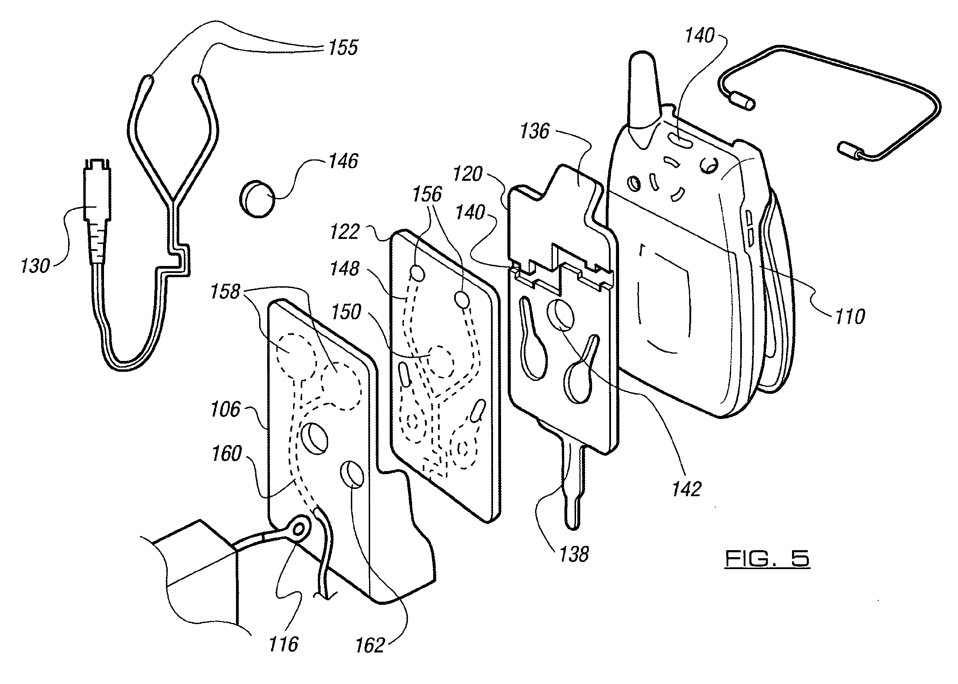

Turning now to Figure 5, the arrangement of the cradle 106 and the panels 120 and 122 of the mounting member 118 is shown. The front panel 120 has tabs 136 and 138 to cover the release mechanism 140 on the rear of the telephone 110. A portion of lower tab 138 extends downward and provides a guide for the attachment of the electrical connector 130 to the telephone. The rear surface of the front panel 120 has a recess 142 formed therein for the reception of a magnet 146 as well as other recesses similar to those shown in figure 2 for reception of the end of securing cable 116 and each end of attachment cable 126.

The front surface of rear panel 122 has recesses 148 and 150 for the respective reception of the ends of electrical connector 130 and the magnet 146. The connector 130 has split wire ends 156 which are accommodated in each of the channels of recess 148 and are connected to electrical contacts 156 in the rear surface of the panel 122 by screws or by solder in the upper end of each channel.

The cradle 106 has circular electrical contacts 158 on its front surface which are joined to the split ends of insulated wire 128, which passes down a recess 160 and extends out of the rear of the cradle 106 to the plug and socket connection. The rear of the cradle contains magnet 132 and has a hole 162 to accommodate the retracting cable 114. A further panel (not shown) may be attached to the rear of the cradle to hold the magnet 132, the wire 128 and the electrical contacts 158 in place.

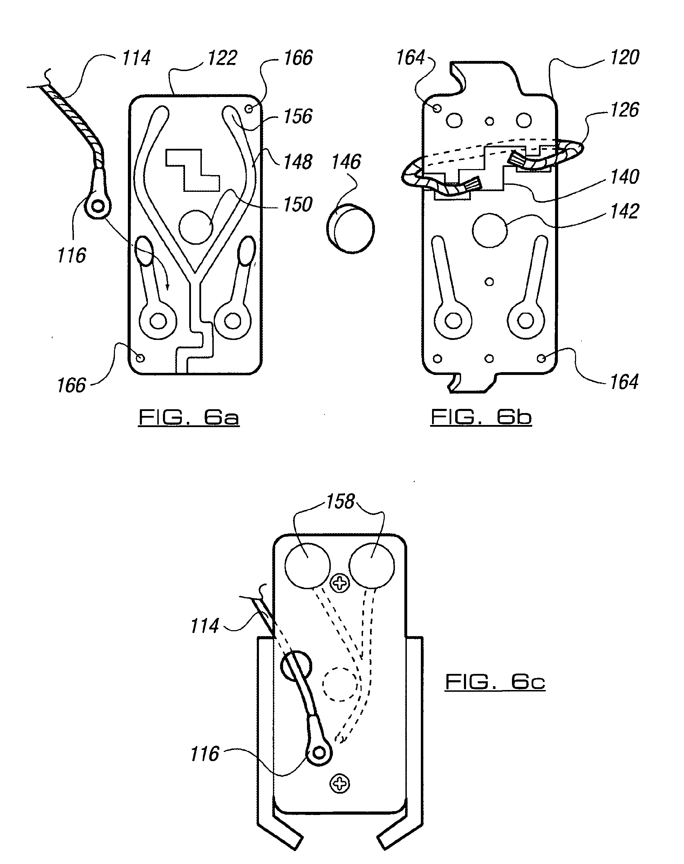

The rear panel 122 is attached to front panel 120 by way of pegs 164 and recesses 166 as shown in Figure 6 or by alternative attachment means such as adhesive or tape. Upon attachment of the front 120 and rear 122 panels, the magnet 146, the ends of securing cable 126, the split ends of the connector 130 and the end 116 of retracting cable 114 are trapped between the two panels in respective recesses.

If the telephone 110 is pulled away from the cradle 106 and subsequently released, the cable 114 will retract on the reel in housing 112 and draw the telephone back to the cradle 106. Once the telephone 110 is close enough to the cradle, the attractive force between magnets 132 and 146 is sufficient to guide the rear panel 122 into correct engagement with the cradle 106 so that the electrical contacts 156 in the rear panel 122 come into contact with the connectors 158 on the cradle 106. The cradle contacts 158 are larger in area than the contacts 156 so that a precise positioning of the telephone 110 on the cradle is not required in order to establish an electrical contact for charging the telephone. Thus the telephone 110 can be continually charged via connector 130 when it is on display on the cradle 106.

Typically, the mounting member is provided of a size; and configuration so as to suit a particular item's security requirements. Although, in the embodiments shown, the mounting member is shown to be of substantially the same size as the rear face of the item, it should be appreciated that there are other possible designs and uses which mean that the mounting member need not be the size of the rear face. Furthermore, although the invention is described with the use of securing cables which are typically of steel or other metal wire, it should be appreciated that any elongate member can be utilised, especially if this increases the security by being more difficult to cut through.

## Claims

1. A securing system for the display of an item, said security system having a mounting, said mounting including a first securing means depending therefrom, said first securing means provided so as to maintain a securing link between the mounting and at least one member, wherein the item is attached to at least one member by a second securing means such that the item and member can be removably and replaceable located relative to said mounting.

2. A securing system according to claim 1, wherein the member comprises two or more panels.

3. A securing system according to claim 2, wherein prior to said panels being brought together to form the member, the first securing means has one or more portions which are located and trapped between said panels so as to secure said first securing means within the member when formed.

4. A securing system according to claim 1, wherein the first securing means comprises a cable which passes from the mounting to the member.

5. A securing system according to claim 4, wherein the cable is resiliently biased towards the mounting.

6. A securing system according to claim 4, wherein the cable is secured at one end to a reel, said reel being biased in a rewind direction to allow payout of the cable under tension.

7. A securing system according to claim 6, wherein a reel housing is attached to the mounting so as to lock the mounting in position on a support frame.

8. A securing system according to claim 1, wherein the second securing means is disposed between a rear portion of the item and the member.

9. A securing system according to claim 8, wherein the rear portion of the item is initially separable from the item so as to allow attachment of the rear portion to the member and repositioning of the rear portion on the item prevents detachment of the mounting plate.

10. A securing system according to claim 8,- wherein an adhesive is inserted between the rear portion and the item and/or member.

11. A securing system according to claim 8, wherein the member is shaped to cover parts of the rear portion and/or item which allow separation of the rear portion from the item.

12. A securing system according to claim 1, wherein the second securing means includes one or more cables depending from the member and passing around the item.

13. A securing system according to claim 1, wherein the first and/or second securing means is positioned and / or shaped to be received in formed locations in the member so as to prevent removal of the same from the member.

14. A securing system according to claim 1, wherein the securing means comprises an adjustable arm which depends outwardly from the mounting and the configuration and orientation of said arm can be adjusted by a customer so as to present the item to them at the required angle and orientation.

15. A securing system according to claim 14, wherein the adjustable arm has at its free end a cradle into which the item is placed along with the member.

16. A securing system according to claim 1, wherein the mounting includes a cradle for receiving the item and the member attached thereto.

17. A securing system according to claim 1, wherein the member establishes an electrical connection between the item and an electrical supply.

18. A securing system according to claim 17, wherein the electrical connection is severed by removal of the member from the mounting.

19. A securing system according to claim 1, wherein the mounting has at least one conductive portion positioned for relative contact with a corresponding conductive portion on the member when the item is located on the mounting.

20. A securing system according to claim 1, wherein each of the mounting and the member are provided with a magnetic means.

21. A securing system according to claim 1, wherein the member is provided with an electrical connector for attachment to the item.
